# EUROPEAN PATENT APPLICATION

(11) **EP 1 998 274 A1**
(43) Date of publication of application: **03.12.2008**
(21) Application number: 07109315.7
(22) Date of filing: 31.05.2007
(51) Int. Cl.: G06K 15/10

(54) **Ink jet printing method with meshed framework**

(71) Applicant: Mutoh Europe N.V., 8400 Oostende (BE)
(72) Inventor: Billiet, Mieke, B-8647, LO-RENINGE (BE); Schaum, Martin, 8670 Oostduinkerke (BE); Defever, Serge, 8460 Oudenburg (BE)
(74) Representative: pronovem

(57) **Abstract**

A method of dot matrix printing comprises a first step of selecting a framework structure (10) comprising a framework (11) and meshes (12). In a second step, the framework (11) is applied to print data to obtain framework-related print data and meshes-related print data. In a third step, first ink dots are recorded during a first pass of a print head, the first ink dots relating to the framework-related print data, and in a fourth step, second ink dots are recorded during one or more following passes of the print head, the second ink dots relating to the meshes-related print data. A dot matrix printer is provided comprising means for carrying out the method of the invention.

## Description

### Field of the Invention

The present invention is related to the field of ink jet printing methods and ink jet printers.

### State of the Art

It is known that both single pass and multi pass ink jet print outs suffer from a number of artefacts, such as banding, step mismatches, ink bleeding, etc. The present invention is concerned with ink bleeding, which is a phenomenon in which ink, recorded at a given location does not stay in place, but migrates. The effect is particularly visible along borders of a print band or where sharp colour transitions occur. Two important causes for ink bleeding may be identified.

A first cause is an adjacent band whose ink is still (partially) wet. This wet ink attracts the ink recorded along the border of the band resulting in an ink flow from the newly recorded band towards the previously recorded band. This problem occurs particularly when high printing speeds are used and the ink is not allowed to dry sufficiently before recording a new band.

A second cause is the type of print medium. Print media which are very porous to the ink, such as many natural fibre fabrics (e.g. textiles such as cotton), absorb the recorded ink, which then migrates through the medium and away from the location where the ink was recorded.

Generally speaking, ink bleeding may be present throughout the printed area. However, the occurrence of other artefacts, such as step mismatches, banding, etc. may enhance the visibility of ink bleeding along the borders of print bands.

The prior art provides various solutions for reducing ink bleeding effects, such as the prior treatment of the print medium, an optimised sequence for recording the different colours, etc. It is known from patent document US 5583550 to print groups of adjacent pixels with clusters of two or four ink drops in order to reduce random ink drop coalescence. However, prior art shingling concepts work with small pattern sizes, which are very sensible to moiré effects, especially on media with a coarse structure (e.g. structure on the order of magnitude of the pattern size). In case of intense ink bleeding, gaps in the patterns may be contaminated with ink and the patterns can loose their effect.

### Aims of the Invention

The present invention aims to provide at least an alternative solution to the problem of ink bleeding and/or banding. It is an aim of the invention to provide a dot matrix printing method and an apparatus implementing said method in which the occurred ink bleeding and/or banding is less visible to the human eye. It is also an aim of the invention to provide a dot matrix printing method and an apparatus implementing said method in which the ink bleeding and/or banding can be controlled.

It is also an aim of the invention to provide a solution for ink bleeding and/or banding which can be customized to the type of print medium. It is a further aim of the invention to provide a solution to the ink bleeding and/or banding problem which does not need large and expensive investments and which can easily be implemented on ink jet (dot matrix) printers.

### Summary of the Invention

The present invention is less concerned with eliminating the occurrence of ink bleeding per se, but rather with dot matrix printing methods which make ink bleeding less visible to the human eye, or in which ink bleeding can be controlled. The inventors have developed particular dot matrix printing methods, as set out in the appended claims, which were found to transport the visible effects caused by ink bleeding to the whole print. As a result, the ink bleeding effects, which are typically discernible along the borders of a band, are spread out in a controlled fashion all over the print and are not perceived any more as undesired or as intermittently occurring artefacts.

According to a first aspect of the invention, there is thus provided a method of dot matrix printing comprising a first step of selecting a framework structure comprising a framework and meshes. In a second step, the framework is applied to print data to obtain framework-related print data and meshes-related print data. In a third step, first ink dots are recorded during a first pass of a print head, the first ink dots relating to the framework-related print data, and in a fourth step, second ink dots are recorded during one or more following passes of the print head, the second ink dots relating to the meshes-related print data. The method is characterised in that the meshes have a size larger than or equal to 12 pixels in at least two directions.

The mesh size is preferably chosen based on the viewing distance. The mesh size may be chosen so as to avoid moiré effects in the print out. Preferably, the meshes have a size larger than or equal to 24 pixels, more preferably 48 pixels. The meshes have preferably a size larger than or equal to 1 mm, more preferably 2 mm, even more preferably 4 mm. The mesh size should be large enough for avoiding the occurrence of moiré fringes in the print out. Furthermore, when the mesh size is too small, the ink bleeding at the band border will behave differently than at the borders between meshes and framework.

Preferably, the meshes are totally enclosed by the framework. The meshes are preferably individually isolated by the framework.

Preferably, the framework comprises a repeating pattern and the pattern is repeated over the entire print area. Two adjacent patterns should have mutually adjacent framework pixels. By so doing, a framework is obtained, which is continuous over the print area.

Preferably, the framework does not comprise boundary lines with the meshes parallel to the print head pass direction and/or a feed step direction.

Preferably, the framework comprises geometrical figures, preferably polygons. More preferably, the geometrical figures and the meshes are tiled so that each mesh is bound at all sides by one or more of said geometrical figures.

Preferably, the framework comprises strips and the strips are parallel to the direction of the print head pass.

Preferably, said step of applying the framework to print data comprises dithering the framework.

Preferably, in the step of recording first ink dots and in the step of recording second ink dots, the print head scans same raster lines. More preferably, said steps of recording first ink dots and recording second ink dots are performed during a bidirectional scan of the print head.

According to a second aspect of the invention, there is provided an apparatus for dot matrix printing comprising means for carrying out the method according to the invention.

### Brief Description of the Drawings

Figures 1 A-D represent meshed framework structures according to the invention.

Figure 2 represents a meshed framework of parallel lines, extending along the fast scan direction.

Figure 3 represents a meshed framework with geometrical figures as framework elements.

Figure 4 represents a method of printing according to the invention by applying the meshed frameworks of figure 1.

Figure 5 represents a method of printing according to the invention by applying a meshed framework. The framework is formed of geometrical figures, i.c. squares (or rhombi).

Figure 6 represents print errors due to a wrong feed step for the method of printing of figure 4.

Figure 7 represents print errors due to a wrong feed step for the method of printing of figure 5.

Figure 8 represents print errors due to a wrong feed step for the meshed framework of figure 4 recorded with the method of figure 5.

Figure 9 represents a dithered meshed framework.

Figure 10 represents a bidirectional printing problem on cockled media (shifted recorded location between bidirectional scans).

### Detailed Description of the Invention

The method of the invention comprises a first step wherein a framework structure is selected. The framework structure comprises a framework and meshes within the framework. In a second step, the selected framework is applied to print data (to a band of print data) and the print data is separated (masked) into print data relating to the framework and print data relating to the meshes. Next, the print data is recorded by iterating two consecutive steps.

Hence, in a first recording step of the method of the invention, the framework-related print data is at least partially recorded. The first recording step may be performed in a single pass of the print head for each band. In a preferred embodiment, the ink dots recorded in the first recording step (first ink dots) only relate to the framework-related print data. In the first recording step, the meshes-related print data is not recorded, or is only partially recorded (e.g. the meshes are recorded at reduced intensity, to still be discerned as meshes). The framework-related print data may be recorded in the first recording step at reduced intensity.

In a second recording step of the method, (second) ink dots are recorded, which relate to the meshes-related print data. The second recording step comes down to recording the print data falling within the meshes of the framework. In practice, the print data that was not recorded in the first recording step may be recorded in the second recording step.

The framework acts as a kind of barrier and restrains the ink in the meshes from leaving the meshes. The framework is a macroscopic structure and is preferably built up by elements or units which are larger than a pixel. The framework should be discerned as an openwork structure comprising meshes which are delimited by the framework elements (strips, figures, etc.). The framework is preferably built up by a pattern that is repeated. The pattern is preferably repeated throughout the whole pass of a print head, or even over the entire print data (print area). As a result, the framework has a uniform, consistent structure. Likewise, the meshes in the framework preferably have identical shape and occur within the framework at regular intervals. The meshes are defined here as open spaces within the framework.

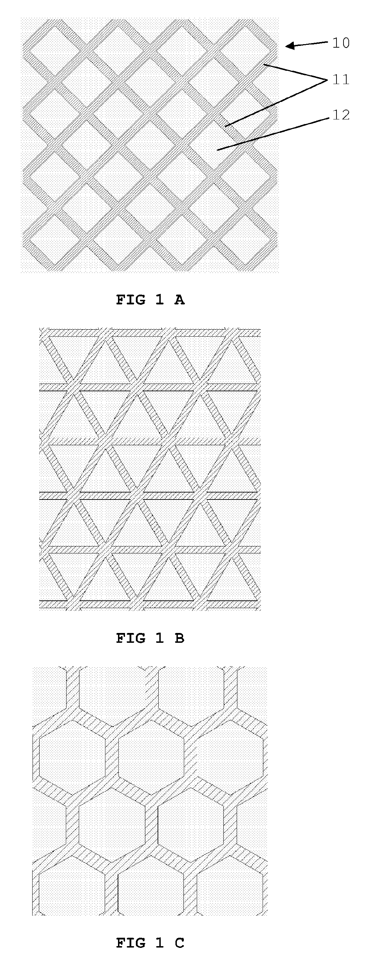

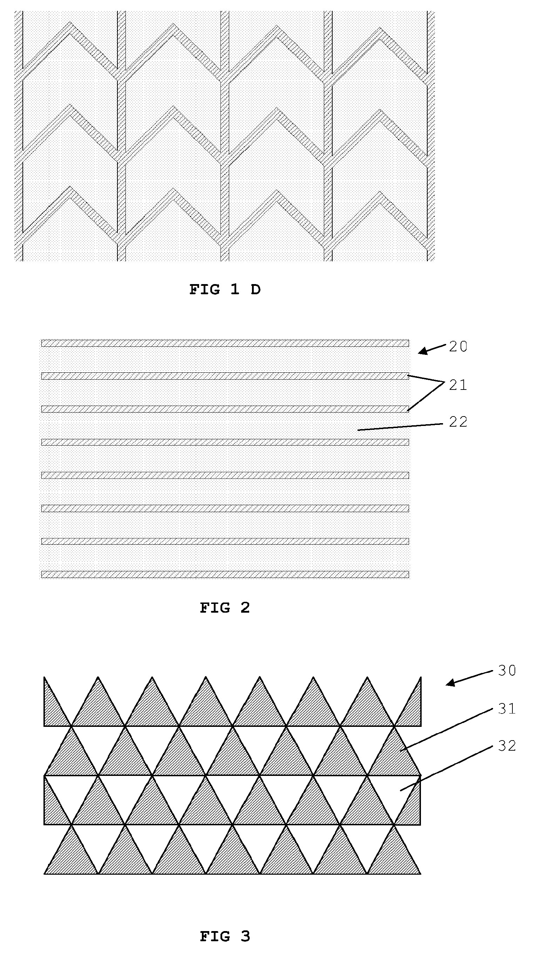

In a first embodiment, as is shown in figures 1A-D, the framework 10 is an openwork structure of lines or strips 11 having meshes 12. The framework of figure 1A is a latticework of crossed strips running diagonally. The framework of figure 1C is a honeycomb structure. The framework of figure 1D comprises juxtaposed fishbone structures. The meshes may have the shape of geometrical figures, such as squares, rhombi, triangles, hexagons, etc. The framework is applied to the print data. In a first recording step, the strips 11 of the framework 10 may either be fully recorded, or only partially recorded (i.e. recorded at reduced intensity or intermittently).

In a second embodiment, shown in figure 2, the framework 20 comprises parallel strips 21 and the meshes 22 are the spacings between the parallel strips 21. The strips 21 may be oriented along any direction, but are most advantageously parallel to the fast scan direction (the direction of movement of a print head when it records one band). It is preferable for the second embodiment, that a single band - a print recorded in one pass or scan of the print head - comprises multiple parallel strips of the meshed framework.

According to a third embodiment, the framework itself comprises geometrical figures, i.e. the framework elements may have the shape of geometrical figures, or the framework may even be made up of geometrical figures. Figure 3 shows an example of a framework 30 according to the third embodiment, having triangles 31 as solid elements. The meshes 32 have also the shape of a triangle.

The frameworks 10, 20 and 30 have preferably a constant morphology (a constant, repeating pattern) throughout each band that is printed and hence also throughout the print. The size of the meshes - or of the framework pattern - is preferably chosen such that the area, in or around a mesh, affected by ink bleeding is small compared to the area of the mesh. If this size is chosen too small the framework may become more visible on the band border than the meshes. The mesh size may not be too small in order to avoid the occurrence of moiré effects, when the interspacing between raster lines lies in the vicinity of a multiple of the interspacing between e.g. the fibres of the print medium. As the framework structure may be visible in the print out - due to among others ink bleeding - the mesh size may also be chosen in relation to the size of the print out and/or the distance from which the print out will be viewed. A slightly regular structure viewed from a certain distance may not be perceived as disturbing.

The structure, or shape of the meshed framework may be selected in relation to the medium on which it is recorded. Most media that are used for high speed printing (textiles, rigids, plastic coverings, etc.) have an inherent visible structure. On the one hand, because of this, the additional structure of the print may not be discerned as such. On the other hand, the structure of the meshed framework may be chosen similar to the structure of the print medium and/or on the same order of magnitude. Furthermore, a particular material structure can be imitated by the structure of the meshed framework. An example of the latter is shown in figure 1 D.

A minimal size for the meshes in the framework may be required in order to transport the edge effects on a band border to the whole print. When the meshes are too small, the meshed framework and any occurring ink bleeding may not be discerned by the human eye from the considered viewing distance. This would make edge effects on the band border visible again. The visual acuity of the human eye is known to be about 12 cycles per degree. From a 1 metre viewing distance, a human eye can resolve distances of about 0.93 millimetres. For a print resolution of 360 dpi, the visual acuity corresponds to slightly more than 12 pixels. Preferably, the mesh size is at least 12 pixels large. The meshed framework is intended to be macroscopic. The meshed framework is hence not intended to be on the order of a few dot sizes. Typical mesh sizes are larger than one millimetre; preferably they are several millimetres in size, depending on the type of print medium. For media that are sensible to moiré effects, such as cloths, the mesh size may be chosen according to the nyquist-shannon theorem which is well known from signal theory.

In a second recording step, following the recording of the selected framework, the print data relating to the meshes is recorded. As the meshes are enclosed within the framework, the ink that is recorded in a mesh is trapped within that mesh. In some cases, this method of printing allows to reduce the occurrence of ink bleeding along the borders of the meshes. In all cases, the ink bleeding phenomena which previously occurred along the borders of the bands are now transported to the borders of the meshes. Hence, the printing method of the invention allows to obtain a structure in the print out, in which the ink bleeding is spread out over the entire print and is not perceived as disturbing any more.

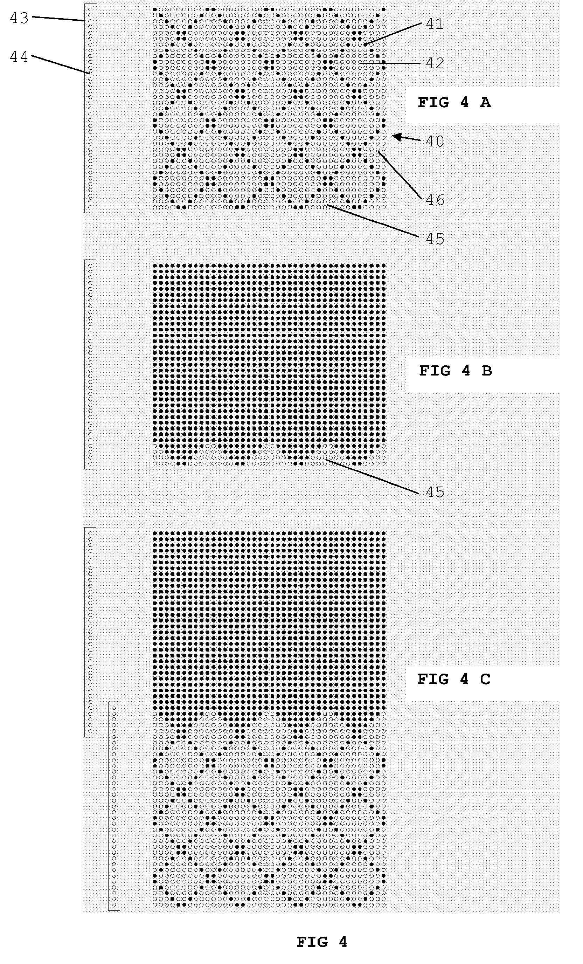

Figure 4 illustrates a fourth embodiment of the printing method of the invention with a meshed framework according to the first embodiment. The framework is an openwork structure of straight lines forming meshes of rhomboidal shape. In the print outs of figure 4, the dots represent the resolution of the print out. Open dots are dots that are still not recorded; closed (full) dots have been recorded in the current or in previous passes of the print head. Hence, in the embodiment of figure 4, a print head comprises an array 43 of thirty-five nozzles 44. All nozzles of the array 43 are used for printing, hence one band recorded during a single pass or scan of the array 43 is 35 nozzles high. First, the meshed framework 40 is selected and applied to the print data. Next, during a first pass of the array 43, the meshed framework 40 is recorded as shown in figure 4A. In a following step, the array 43 scans the band recorded in the previous pass again and thereby fills the meshes 42 of the framework 40, as shown in figure 4B. Only those meshes, whose borders have been completely recorded are filled. The meshes 45, at the downstream border of the band are not complete (a part of the framework is missing). Hence, these "partial" meshes will be recorded in a following pass. The "partial" meshes 46, at the lateral boundaries of each pass are recorded together with the meshes 42.

Thereafter, as illustrated by figure 4C, the array 43 shifts down one feed step (30 dots) on the medium and records the continuation of the meshed framework 40 in a new pass. In a following pass (scan) of the array 43 over the same dot locations, the meshes 42 are filled, comprising the meshes 45 which were not recorded previously. By so doing, full coverage can be achieved.

When bidirectional printing is used in the printing mode of figure 4, the entire framework is recorded in one direction (e.g. the array 43 moving from left to right), and all the meshes are recorded in the other, opposed direction (e.g. from right to left). Therefore, an additional advantage of the printing mode of figure 4 is a reduced bidirectional banding, as all the meshes are recorded in the same direction.

Bidirectional banding is a print artefact occurring with bidirectional ink jet printers. Consecutive bands are recorded with the print head moving in opposed directions. As the nozzle arrays in the print head are arranged in a fixed colour sequence, e.g. CYMK, the colour recording sequence on the medium is inversed between two bidirectionally printed bands. By way of example, for a CYMK print head, in a first band from left to right the recording sequence is (first to last) K, M, Y, C. In the adjacent band, recorded in opposed direction, the recording sequence is C, Y, M, K. This typically generates a varying colour or colour depth between adjacent bands, known as bidirectional banding.

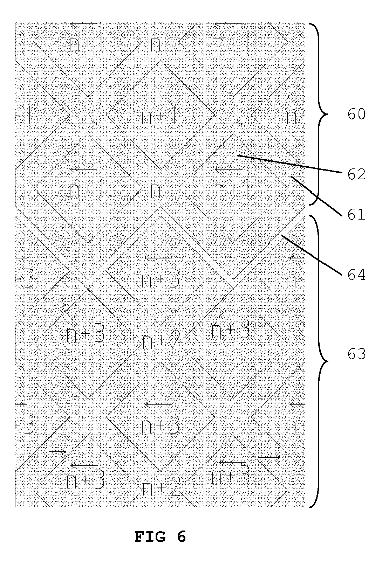

In the printing mode of figure 4, feed errors, or feed step mismatches when the array 43 is moved relatively to the print medium are visible along the border of the band. Such feed step mismatch errors are illustrated in figure 6 for a same print method as in the embodiment of figure 4. A framework structure 60 is selected for recording an image and is applied to the print data. In a pass n, that portion of print data that falls within the framework 61 is recorded. The band is completed in a pass n+1 of the print head, in which the print data falling within meshes 62 is recorded. In the embodiment of figure 6, passes n and n+1 are bidirectional passes, without a feed step in between. The arrows in the figure 6 indicate the direction of motion of the print head relative to the medium. Between pass n+1 and pass n+2 a feed step is carried out, whereafter in bidirectional passes n+2 and n+3 a new band 63 is recorded in the same manner as for band 60. Due to a too large feed step, a white gap 64 is created in between the two bands 60 and 63. However, as the band border is not a straight line, but is shaped as a triangle wave, feed errors may be less visible.

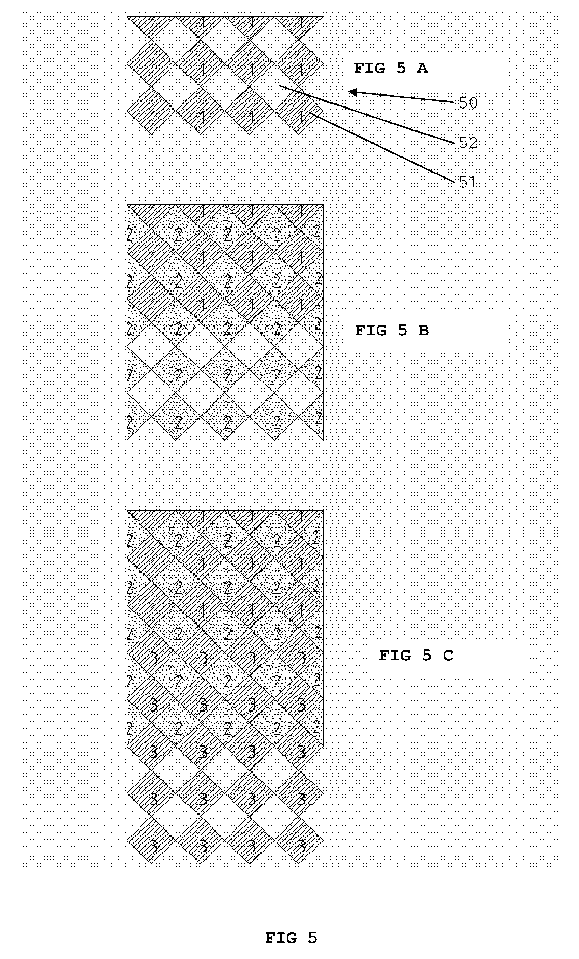

Figure 5 illustrates a fifth embodiment of the dot matrix printing method of the invention with a meshed framework according to the third embodiment. The framework 50 is selected, comprising geometrical figures as framework elements 51 in between the meshes 52 and applied to the print data. In a first recording step, the portion of print data falling within the meshed framework 51 is recorded. As figure 5A starts from the top of the image, the framework 50 is cut at the top, and in the first pass "1" only half the height of a pass is recorded in figure 5A. In a following step, shown in figure 5B, during a second pass "2" of the print head, the portion of print data falling within the meshes 52 is recorded. The meshes 52 of pass "2" extend beyond the framework recorded in pass "1". Actually, the meshes 52 may be seen as a framework as well, and the squares 51 as meshes. In the following pass "3", as illustrated by figure 5C, print data relating to the meshes obtained in the previous pass is recorded.

In the embodiment of figure 5, meshes 52 and framework elements 51 have the same shape and are the complement of each other. They may be considered as tiles, wherein each tile recorded in one pass is tiled with tiles recorded in a subsequent pass. Therefore, both the "1" and "3" tiles and the "2" tiles may be considered as framework elements and the other one of the two as meshes.

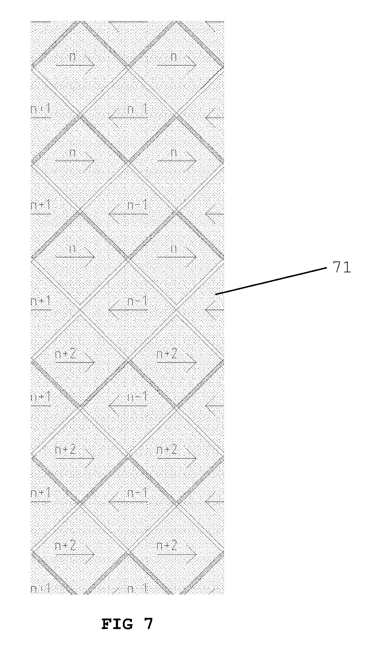

When bidirectional printing is applied to the printing mode of figure 5, tiles recorded in subsequent passes are not printed in the same direction. This may lead to bidirectional banding. Moreover, possible feed errors in the mode of figure 5 will be present throughout the band (at the borders between tiles, or between meshes and framework elements) and may therefore be less visible. In other words, the print out may appear more uniform. This is illustrated in figure 7 for a feed step which is too large. The tiles recorded in pass n+1, after a medium feed, overlap a little with the downstream neighbouring tiles recorded in pass n and a gap is created between the tiles of pass n+1 and their upstream neighbouring tiles of pass n. The same applies between tiles n+1 and n+2. Note also that a symmetrical error is created in a transition region 71, in the row of tiles of pass n+1 which are interposed between a row of tiles of pass n and a row of tiles of pass n+2. The border between pass n and pass n+2 gets visible. However, the feed step error is propagated throughout the whole print, reducing the visible effect of banding.

The (bidirectional) printing mode of figure 4 may be applied to the framework of figure 5 as well. In the latter case, the print head records two passes without a feed step. During those two passes, one band is fully recorded (framework and meshes). Thereafter, the print head carries out a feed step and the same method is applied again.

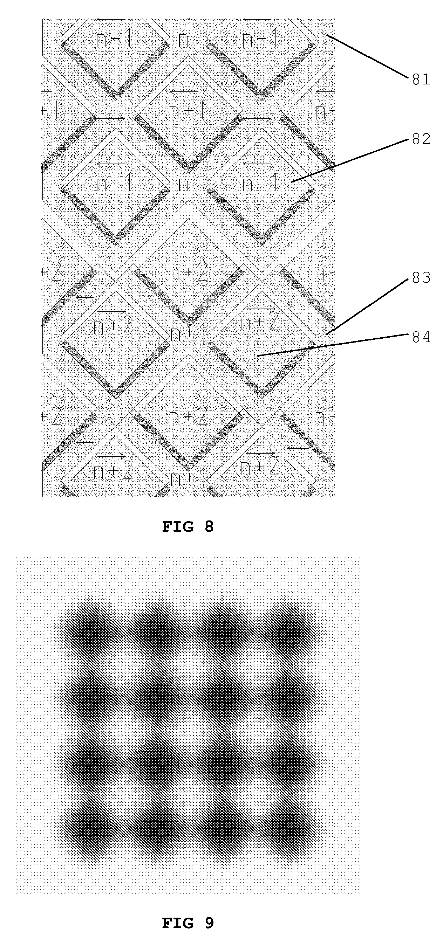

Vice versa, the printing mode of figure 5 may be applied to the framework of figure 4. This is illustrated in figure 8. Figure 8 illustrates a lowermost portion of a lattice-like framework 81 recorded in a pass n. A subsequent pass n+1 is scanned after execution of a feed step, equal to half the width of a pass. In pass n+1, the meshes 82 left by the framework 81 are filled with print data and at the same time the continuation 83 of framework 81 is recorded. Thereafter, a new feed step is carried out and a pass n+2 is recorded, in which the meshes 84 of framework 83 are filled with print data. Figure 8 illustrates the effect of a wrong feed step (is too large in figure 8). Ink bleeding in this case would cause a symmetrical error and the framework would get visible. In case of bidirectional printing, the printing directions of the framework and the cells change between consecutive passes and the framework would get visible.

According to a sixth embodiment, the meshed framework, such as the frameworks of the previous embodiments, is recorded in a first pass at less than full intensity. By so doing, the framework will be less apparent in the print out. Some artefacts, such as step mismatches may therefore become less perceivable.

In a seventh embodiment, dithering methods are applied to the framework. An example of a dithered framework is illustrated in figure 9. The dithered framework is applied to the print data. Dithering of the framework may be obtained by the application of an appropriate print mask.

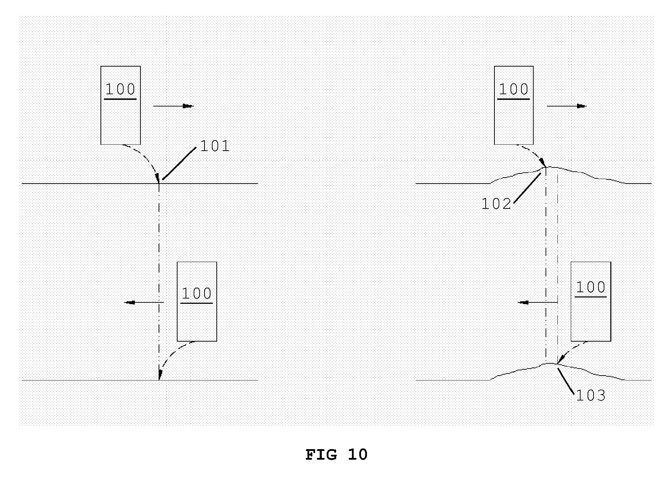

The meshed framework 20 of the second embodiment, with lines parallel to the fast scan direction, proved to be particularly effective to "hide" staggered bands on print media that have a tendency to cockle. Due to cockling, the distance between print head and medium may not be constant. As shown in figure 10, in case of bidirectional printing, this leads to a staggering of recorded locations. A print head 100 which is printing bidirectionally is arranged to fire from both print directions an ink drop which strikes a flat medium at a same location 101. When the medium is cockled, the ink drop fired during a forward pass strikes the cockled medium at a location 102, while the ink drop fired during a backward pass strikes the medium at a location 103, slightly displaced from location 102.

Ink jet (dot matrix) printers may be provided with dedicated print masks for implementing the printing methods of the invention. The masks can be hardware or software masks. The framework-related print data and the meshes-related print data may be recorded by application of a single mask: the framework mask. After recording the framework, the recorded data is subtracted from the print data of that band, and the remaining data (i.e. the meshes) is recorded in a following pass. Alternatively, multiple masks may be provided. The printer may comprise a user interface for choosing an appropriate mask(s) in function of one or more parameters, such as the print medium, the print quality, or the print speed.

In multi-colour ink jet printers, the print method of the invention may be applied to all colours simultaneously, or to only a subset of the colours.

The method of the invention may be used in traditional ink jet printers with thermally drying ink, but may also be used in UV ink jet printers, using UV-curable inks.

## Claims

1. A method of dot matrix printing comprising the steps of:
- selecting a framework structure (10) comprising a framework (11) and meshes (12),
- applying the framework to print data to obtain framework-related print data (41) and meshes-related print data (42),
- recording the framework-related print data in the form of first ink dots, during a first pass of a print head and
- recording the meshes-related print data in the form of second ink dots, during one or more following passes of the print head,
**characterised in that** the meshes have a size larger than or equal to 12 pixels in at least two directions.

2. The method according to claim 1, wherein the meshes are totally enclosed by the framework.

3. The method according to claim 1 or 2, wherein the framework comprises a repeating pattern, wherein the step of recording the framework-related print data is arranged to repeat the pattern over the entire print area and wherein adjacent patterns have mutually sideways adjacent framework pixels.

4. The method according to any one of the preceding claims, wherein the boundary lines between the framework and the meshes are not parallel to the print head pass direction and/or feed step direction.

5. The method according to any one of the preceding claims, wherein the framework comprises geometrical figures (31), preferably polygons.

6. The method according to claim 5, wherein the geometrical figures (51) and the meshes (52) are tiled so that each mesh is enclosed all around by one or more of said geometrical figures.

7. The method according to any one of the claims 1 to 3, wherein the framework comprises strips (21) and the strips are parallel to the direction of the print head pass.

8. The method according to any one of the preceding claims, wherein said step of applying the framework to print data comprises dithering the framework.

9. The method according to any one of the preceding claims, wherein in the step of recording the framework-related print data and in the step of recording the meshes-related print data, the print head scans same raster lines.

10. An apparatus for dot matrix printing comprising means for carrying out the method according to any one of the claims 1 to 9.
